# EUROPÄISCHE PATENTSCHRIFT

(11) **EP 1 320 965 B1**
(45) Veröffentlichungstag und Bekanntmachung des Hinweises auf die Patenterteilung: **09.02.2005**
(21) Anmeldenummer: 01969744.0
(22) Anmeldetag: 20.09.2001
(51) Int. Cl.: H04L 12/58

(54) **VERFAHREN UND VORRICHTUNG ZUM AUSTAUSCH VON INFORMATIONEN**
METHOD AND DEVICE FOR EXCHANGING INFORMATION
PROCEDE ET DISPOSITIF POUR ECHANGER DES INFORMATIONS

(30) Priorität: 26.09.2000 EP 00120914
(43) Veröffentlichungstag der Anmeldung: 25.06.2003
(73) Patentinhaber: answers GmbH & Co. Erste Vermarktungs KG, 65307 Bad Schwalbach (DE)
(72) Erfinder: Gens, Daniel, 65307 Bad Schwalbach (DE)
(74) Vertreter: Herden, Andreas, Dipl.-Ing.
(86) Internationale Anmeldenummer: PCT/EP2001/010880
(87) Internationale Veröffentlichungsnummer: WO 2002/028037

(56) Entgegenhaltungen:
- EP-A- 0 838 774
- WO-A-00/39987
- WO-A-96/38987
- WO-A-97/49251
- WO-A-98/47268
- US-A- 5 493 692
- SCHNEIDER K: "E-MAIL AND HANDY. SMS-GATEWAY AUF BASIS VON LOTUS NOTUS" NET - ZEITSCHRIFT FUER KOMMUNIKATIONSMANAGEMENT,DE,HUTHIG VERLAG, HEILDERBERG, Bd. 52, Nr. 8/09, 1998, Seite 56 XP000782766 ISSN: 0947-4765

## Beschreibung

Die Erfindung betrifft allgemein ein System zur Übertragung von Information und im speziellen ein Verfahren zur Übertragung von Information gemäß dem Oberbegriff des Anspruchs 1 und eine Vorrichtung zur Übertragung von Information gemäß dem Oberbegriff des Anspruchs 22.

Es sind zahlreiche Verfahren zur Übertragung von Information bekannt. Dabei ist eines der bestbekannten und meistgenutzten Verfahren immer noch das klassische Versenden und Empfangen von Briefen. Hierbei liegen wegen der körperlichen Übersendung des Schriftstücks auf der Seite des Empfänger zwar in hohem Grade authentische Informationen vor, jedoch sind diese für eine nachfolgende Weiterbearbeitung, etwa in elektronischer Form nicht geeignet und erzeugen, soweit dies nötig ist hohe Kosten durch manuelle Erfassung oder das Scannen und Nachbearbeiten gescannter Texte. Darüber hinaus ist der körperliche Transport des Schriftstücks zeitaufwendig und kann in vielen Fällen nicht mehr den Bedürfnissen eines zügigen Informationsaustauschs genügen.

Die Übersendung von Schriftstücken per Telefax ist zwar schneller und führt während der Datenübertragung zu einem elektronischen Abbild der in dem Schriftstück enthaltenen Information, jedoch ist auch dieses elektronische Abbild oder ein entsprechender Ausdruck des Telefaxgerätes für eine weitere elektronische Bearbeitung der Information durch einen Empfänger in der Regel nicht geeignet.

Ferner existiert seit geraumer Zeit ein dem herkömmlichen Briefverkehr entsprechendes elektronisches Briefversendesystem, welches als electronic-mail oder auch als e-Mail bezeichnet wird. Hierbei werden Daten zwischen Computersystemen ausgetauscht, welche miteinander über ein Netzwerk oder einen Netzverbund kommunizieren. Es ist dabei möglich, Daten zwischen unterschiedlichen Computersystemen, beispielsweise zwischen Personalcomputern, auszutauschen. Die Funktionsabläufe in einem derartigen e-Mail-System sind abhängig von den jeweils auf den miteinander kommunizierenden Rechenanlagen installierten Betriebssystemen. Dabei soll das e-Mail-System durch Konvertierungsprogramme einen reibungslosen Übergang zwischen verschiedenen Betriebssystemen bereitstellen. Heutige e-Mail-Systeme weisen ferner bestimmte Benutzerfunktionen auf. So kann durch den Eingang oder durch das Lesen einer Nachricht auf der Empfängerseite eine Rückmeldung, die dieses bestätigt, an den Sender der Nachricht ausgelöst werden. Zur Erzeugung der zu übersendenden Daten können sowohl vom jeweiligen e-Mail-System bereitgestellte Editoren verwendet werden, als auch Computerdateien, welche mit anderen Textverarbeitungssystemen erzeugt wurden, importiert werden. Die letzteren werden dabei bei den herkömmlichen e-Mail-Systemen als sogenannte angehängte Dateien (ANNEX-file) versandt. Leider werden diese angehängten Dateien empfängerseitig häufig nur mit Problemen und Aufwand in die dort benutzten Systeme übertragen. Die Probleme resultieren aus den unterschiedlichen Datenstrukturen bzw. Inhalten der Sende- bzw.

Empfangssysteme. Die Unterschiede sind häufig in der Verschiedenartigkeit der verwendeten Soft- und Hardware begründet. Z.Bsp. Datenübertragung von KHK-Rechnungsprogramm in SAP R3. Dabei kann es insbesondere bei den zur Druckersteuerung oder Formatierung verwendeten Steuerzeichen zu einer Fehlinterpretation kommen, welche die Struktur der Dateien durcheinander bringen kann.

Das Dokument EP-A-0 838 774 beschreibt das Verwenden bekannten e-mail Systeme oder Dokumententypen, um Dokumente in austauschbarem Dateiformat z.B. mittels HTTP auf einem Server zur Verfügung zustellen. Das Dokument WO-A-9749251 beschreibt den Austausch von Machrichten zwischen gleichen oder veschiedenen Medien via e-mail, voice mail und Fax mittels einer universellen Mailbox.

Neben den zuvor beschriebenen, rein elektronischen Briefversendesystemen existiert auch eine Mischform zwischen elektronischer Mail und herkömmlicher Versendung per Briefumschlag. Bei diesem sogenannten Hybrid-Mail-System werden die Daten der Sender elektronisch an eine Zentraleinheit übermittelt, in welcher sie gemäß der mitgelieferten Information des Senders ausgedruckt werden und diese ausgedruckten Daten dann herkömmlich per Post in einem Briefumschlag an den Empfänger übermittelt werden. Jedoch ist der empfangsseitige Vorgang des Ausdruckens und des herkömmlichen Verteilens der Daten weiterhin sehr zeitaufwendig. Zudem besteht empfängerseitig nicht die Möglichkeit, die Daten elektronisch weiterzuverarbeiten. Außerdem gestaltet sich die Erzeugung eines vom Absender vorgegebenen Druckbildes in der Zentraleinheit schwierig und entspricht häufig nicht mehr den Vorstellungen des Absenders.

Der Erfindung liegt daher die Aufgabe zugrunde, ein universelles System zur Übertragung von Information bereitzustellen, welches die vorstehenden Nachteile mildert und insbesondere unabhängig von der Art der versendeten Information eine schnelle und kostengünstige Übertragung bereitstellt, welche insbesondere für den Absender ohne Mehraufwand zu handhaben ist und beim Empfänger ohne wesentlichen Mehraufwand weiterverarbeitbare Daten bereitstellt.

Die Aufgabe wird auf überraschend einfache Weise bereits mit einem Verfahren mit den Merkmalen des Anspruchs 1 und einer Vorrichtung mit den Merkmalen des Anspruchs 22 gelöst.

Die Erfindung hat den großen Vorteil, daß die übersandten Daten empfängerseitig so vorliegen, wie sie von der Datenverarbeitungsumgebung des Absenders bereitgestellt wurden ohne daß es dabei zu Komplikationen kommt, wenn völlig verschiedenen Systeme auf der Seite des Absenders und des Empfängers eingesetzt werden.

Durch die Erfindung wird für den Anwender eine direkte Verbindung zwischen Absender und Empfänger geschaffen, welche unabhängig von der verwendeten technischen Ausrüstung sowohl das verwendete Schriftbild und den gewählten Seitenaufbau erhalten kann als auch direkt weiter nutzbare Daten bereithält.

Ein wesentlicher Gedanke der Erfindung besteht darin, daß auf der Seite des Absenders aus einer Fülle verschiedener Darstellungsmöglichkeiten, die sich aus der Vielzahl der möglichen verwendbaren Geräte ergibt, eine nahezu einheitliche Form der zu übertragenden Daten geschaffen wird. Dies kann beispielsweise dadurch erfolgen, daß die an einen Drucker abgesandten Daten aufgenommen und zu einem virtuellen Dokument umgesetzt werden, welches alle nötigen Informationen zum Seitenaufbau weiter behält. Ein spezieller Druckertreiber stellt hierbei das elektronische Interface zum virtuellen Papierdokument her. Da große Firmen für nahezu alle Textverarbeitungssysteme entsprechende Druckertreiber herstellen, kann hierdurch ein einfaches elektronisches Interface zu beliebigen Textsystemen bereitgestellt werden. Ferner können facsimiliert vorliegende Daten, wie diese beispielsweise bei der Übertragung von Telefaxen oder beim Einscannen von Dokumenten erzeugt werden, ebenfalls zu virtuellen Seiten eines virtuellen Dokuments aufgebaut werden. In diesen Fällen kann eine nachgeschaltete OCR- bzw. Schrifterkennungssoftware weiterverwendbare elektronische Daten bereitstellen.

In vorteilhafter Weise werden mit der Information auch Rahmendaten übertragen, welche die Daten betreffende Strukturinformation und/oder Bearbeitungsinformation enthalten. Ferner kann die Weiterleitung auch auf vollständig elektronischem Wege geschehen, wenn beispielsweise durch Schrifterkennung oder entsprechende Zuordnung der Daten Empfänger-Adressdaten für die elektronische Adressierung bereitgestellt werden.

In besonders vorteilhafter Weise kann ein im Netzwerk oder einem Netzverbund befindliches elektronisches Portal die Daten empfangen, speichern und unter Beachtung der jeweiligen vorgegebenen Sicherheitsstufen entsprechend weiterleiten.
Ein derartiges Portal kann mehrere auswählbare Einheiten (Auswahleinheiten) umfassen, welche die elektronische Weiterleitung und den Empfang in Form von Knotenpunkten übernehmen, wird aber von dem Benutzer vorzugsweise als nur ein "großes elektronisches Postamt" wahrgenommen.
Durch die Bereitstellung von zusätzlicher Bearbeitungsinformation kann jedoch die Übertragung an eine möglichst optimal geeignete Auswahleinheit des Netzverbundes erfolgen, und die Auswahleinheit in Abhängigkeit von den Bearbeitungsinformationen die Daten für den wenigstens einen Empfänger bereithalten.

Die Bearbeitungsinformationen können in vorteilhafter Weise weitere Angaben über den oder die Empfänger wie Angaben zur Art und Zeit der Weiterleitung oder die einzuhaltende Sicherheitsstufe enthalten.

Die Bearbeitungsinformationen können ferner eine Befehlssequenz mitführen, welche in Abhängigkeit von einer Zustellung der Daten an den wenigstens einen Empfänger ein Empfangssignal an den Absender auslöst.

Außerdem weisen die Strukturinformationen vorteilhaft eine Beschreibung des Aufbaus der Daten auf. Die Beschreibung enthält dabei auch Steuerinformationen zum Aufbau des Druckbildes am Ort des Empfängers. Somit wird mit Vorteil ein "virtuelles Druck-Dokument" gesendet und empfangen. Die übertragenen Daten sind somit redundant.

Als Daten können reine Textdateien, Bilddateien, Mischdateien oder im Wesentlichen aus Zahlen bestehende Rechnungs- oder Bestellformulare übertragen werden, ohne daß der Benutzer eine irgendwie geartete Beschränkung erfährt.
Möglich ist es auch, das erfindungsgemäße Verfahren für die automatisierte Erstellung und Versendung von Telefonabrechnungen oder Kreditkartenabrechnungen einzusetzen. Vorteilhaft dabei ist dabei auch die automatisierte elektronische Überwachung eines Zahlungseinganges bei gleichzeitigem Vorliegen eines gedruckten Zahlungsbeleges.

Somit bringt die Erfindung auch den Vorteil mit sich, daß ein Wechsel von elektronischem Datensatz zu daraus erzeugten Druck-Dokumenten beziehungsweise die Umwandlung in umgekehrter Richtung empfängerseitig oder senderseitig nicht mehrfach durchgeführt werden muß.

Mit einer Sicherung kann die zu übertragende Information vorteilhaft gegen unbefugtes Lesen und/oder eine Datenmanipulation zu gesichert werden. Dabei kann die Sicherung durch eine Stimmerkennung und/oder eine Handschriften-Authentisierung gegeben sein. Ferner kann die Sicherung durch die Angabe eines vorgebbaren Kennwortes erfolgen. Digitales Wasserzeichen.

Gemäß der Erfindung kann eine Sicherungskennung, welche Daten zur Sicherung sowie zur Verwendung umfaßt, jeweils für die Information und/oder die Strukturinformationen und/oder die Bearbeitungsinformationen mitgeführt werden. Dabei können die einzelnen Sicherungskennungen unabhängig voneinander aufgebaut sein oder logisch miteinander verknüpft sein. Mit Vorteil kann somit eine hierarchische Zugangsstruktur zu den Daten aufgebaut werden.

Bei einer Variante des erfindungsgemäßen Verfahrens werden die Daten mit Testsequenzen zur Kontrolle des Ablaufs übertragen. Es können aber auch in vorgegebenen Intervallen Testdaten zu einer Überprüfung übertragen werden.
In dem erfindungsgemäßen Verfahren werden der Absender und der wenigstens eine Empfänger bei der Auswahleinheit registriert. Somit ist mit Vorteil eine Vorlage einer Kennung möglich, welche über die Bearbeitungsinformationen selbsttätig überprüft werden kann. Die Verbindung zum Empfänger kann erfindungsgemäß auf verschiedene Art und Weise erfolgen.

So können die Daten über funkbetriebene Endgeräte aus der Auswahleinheit ausgelesen werden. Der oder die Empfänger können die Daten wahlweise auch über optisch angekoppelte Endgeräte aus der Auswahleinheit auslesen oder Daten in diese zurücksenden. Daraus ergeben sich direkte unbeschränkte Zugangsmöglichkeiten, wodurch aber die Aufbereitungsqualität der Daten nicht leidet.

So ist es beispielsweise möglich, daß einem Empfänger das Vorhandensein einer Übersendung an dessen Handy angezeigt wird, dieser diese beispielsweise empfangen und lesen, etwa im WAP-Standard lesen und die entsprechende Weiterleitung veranlassen kann, ohne daß hierdurch die Qualität der nachfolgend empfangenen Übersendung negativ beeinflußt wird.

Die Erfindung wird nachfolgend anhand der beiliegenden Zeichnung an einem bevorzugten Ausführungsbeispiel näher erläutert.
Es zeigen:
- Fig. 1: eine Darstellung des Informationsverlustes bei herkömmlichem, auf Papier erfolgendem Informationsaustausch, wie beispielsweise bei Brief- oder Telefaxübersendung,
- Fig. 2: eine Darstellung des erfindungsgemäßen, Informationstransports, bei welchem durch Verwendung eines virtuellen Papierdokuments im wesentlichen kein Informationsverlust auftritt,
- Fig. 3: eine schematische Darstellung einer erfindungsgemäßen Datenübertragungseinrichtung.

Die Erfindung wird nachfolgend, ohne Beschränkung der Allgemeinheit, zunächst anhand einer bevorzugten Ausführungsform beschrieben, wobei zum besseren Verständnis vorab auf die bisherige Situation und bei der Beschreibung verwendete Definitionen und Begriffe eingegangen wird.

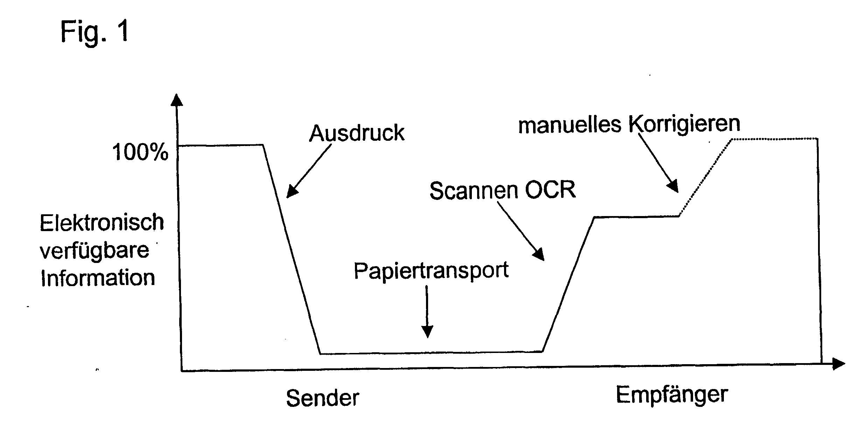

Aus Fig. 1 ist der bei bisheriger per Brief oder Telefax erfolgender Versendung von schriftlicher, benutzerbezogener Information auftretende Verlust an weiterverarbeitbarer Information klar zu erkennen.

Durch den Vorgang des Ausdruckens wird zunächst die elektronisch verfügbaren Information am Ort des Senders auf nahezu Null reduziert, und es liegen selbst im Falle einer Telefaxübermittlung auf der Seite des Empfängers zwar körperlich archivierbare Schriftstücke aber nicht unmittelbar weiterverarbeitbare Daten vor. Erst das zeit- und fehlerträchtige Einscannen des Schriftstücks mit nachfolgender Fehlerkorrektur schafft wieder einen Datensatz, welcher eine empfängerspezifische Auswertung ermöglicht. Hierbei fallen jedoch Personalkosten in nicht unerheblichem Maß an.

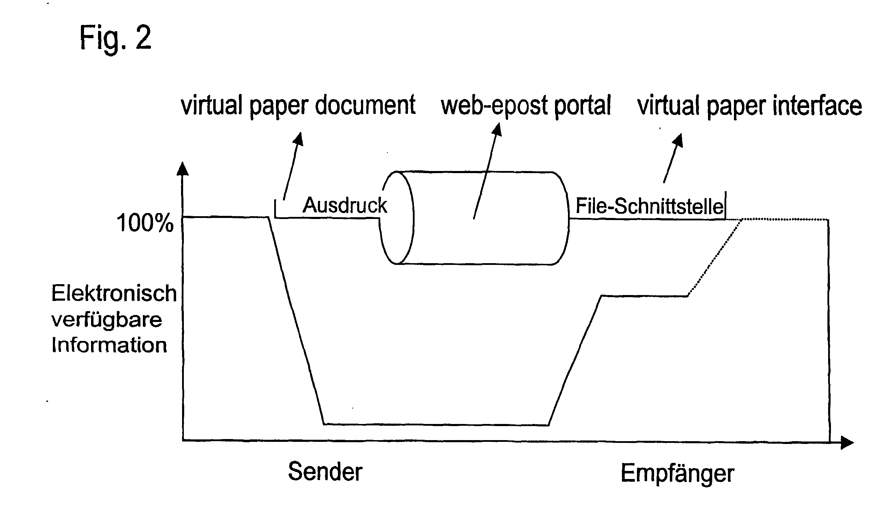

Fig. 2 zeigt, wie der Grundgedanke der vorliegenden Erfindung auf einfache Weise umsetzbar ist und es werden nachfolgend zunächst technische Grundkonzepte der Erfindung beschrieben, bevor eine detaillierte Beschreibung des bevorzugten Ausführungsbeispiels vorgenommen wird.

Bereits zu einem sehr frühen Zeitpunkt, dies bedeutet entweder bei Bereitstellung der Druckdaten für einen Drucker oder etwa beim Versenden von Telefaxsignalen oder eines e-Mail-Anhangs, wird ein virtuelles Papierdokument erzeugt, welches alle benutzerbezogene Information umfaßt. Dies bedeutet, es werden in einer systemunabhängigen Weise sowohl alle Inhalte der schriftlichen Information als auch alle auf die Form bezogenen Daten erfaßt und weitergeleitet.

Das als web-epostviper-portal bezeichnete elektronische Portal oder elektronische Postamt, welches sich im Internet oder in einem Intranet befindet, empfängt diese Daten und stellt in einer einfachsten Ausführungsform diese Daten einem Empfänger zur Verfügung oder übernimmt die Übersendung an den Empfänger selbst.

Am Ort des Empfängers wird das virtuelle Papierdokument in eine beliebige Ausgabeform umgewandelt, beispielsweise eine druckbare Datei oder ein Telefaxempfangssignal, welches zu entsprechender schriftlicher Information ohne Verluste an Inhalt oder Form der zweidimensionalen Darstellung führt. In jedem Falle umfasst das virtuelle Papierdokumet, welches auch in den Figuren als virtual paper document bezeichnet wird, alle benutzerbezogene Information in elektronischer, weiterbe- und -verarbeitbarer Form.

Die Erfindung beinhaltet somit auch eine Plattform zum Austausch von Datenformat- bzw. Strukturbeschreibungen.
Der Empfänger erzeugt eine oder mehrere Beschreibungen wie er Daten in sein System übernehmen kann. Diese Beschreibung wird in dem nachfolgend noch detaillierter beschriebenen viper-System, welches eine im Inter- oder einem Intranet auswählbare Einheit darstellt, unter seiner Adresse gespeichert. Diese auswählbare Einheit wird nachfolgend auch als Auswahleinheit bezeichnet. Der Sender sendet als Bestandteil des virtuellen Papiers ebenfalls die Beschreibung der Sendedaten bzw. Struktur. Das viper-System führt eine automatische bzw. unterstützte Anpassung der beiden Formate durch.

Eine mögliche Ausführungsform der Beschreibungen wird mittels einer Beschreibungssprache, beispielsweise XML realisiert.

Beispiel für eine derartige Beschreibung der Formate:

| Sender: | |
|---|---|
| Rechnungsnr. | 5 Stellen numerisch |
| Rechnungsdaten | 6 Stellen Datum |
| Gesamtsumme | 10.2 Stellen Double |
| ..... | |
| | |

| Empfänger: | |
|---|---|
| Lieferantennr. | 8 Stellig numerisch |
| Rechnungsnr. | 10 Stellig numerisch |
| Mwst. | 7.2 Stellen Double |

Der Anpassungsprozess ist iterativ und läuft bis alle empfangsseitig notwendigen Daten vorhanden und im definierten Format vorliegen. Zu diesem Zweck baut das viper-System eine bidirektionale Kommunikationsverbindung per Intra- oder Internetverbindung oder per direkter Anwahl eines empfängerseitigen Modems zum Empfänger auf und tauscht Zugum-Zug alle zur Beschreibung des Empfängerformats notwendigen Daten aus.

Während der gesamten Übertragungskette kommt es somit weder zum Verlust an elektronisch verfügbarer Information noch zu einer zusätzlichen Beanspruchung der Benutzer, da durch entsprechenden Schnittstellen jeweils die bereits vorhandenen Einrichtungen verwendbar sind.

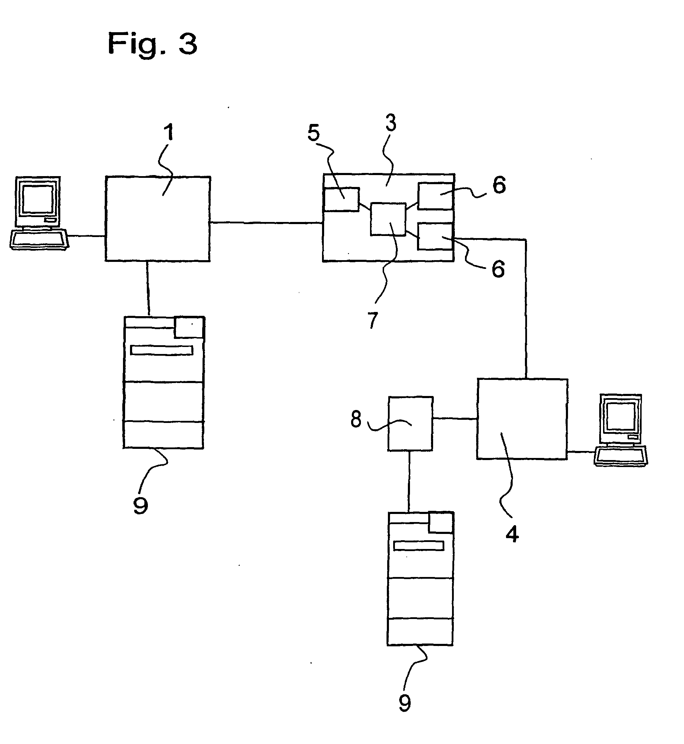

Bei einer bevorzugten praktischen Ausführungsform der Erfindung wird all dies wie nachfolgend beschrieben realisiert. Es wird auf Fig. 3 Bezug genommen, in welcher der Absender zu übertragende Information vorzugsweise mit einem Personalcomputer erzeugt, der an eine erste elektronische Einrichtung 1 angeschlossen ist, welche mit einer Auswahleinheit 3 des Internetportals, dem viper-System kommuniziert. Der Anschluß des Personalcomputers kann über eine Netzwerkverbindung, eine serielle oder parallele Datenverbindung, optisch oder auch über eine DFÜ-Schnittstelle per Modem, vorzugsweise per digitalem Modem, beispielsweise per ISDN-Modem erfolgen. Somit ist die elektronische Einrichtung 1 vorteilhaft zwar am Ort des Absenders angeordnet, muß dies aber nicht sein. Gleiches gilt für die elektronische Einrichtung 4 am Ort des Emfängers.

Der Absender kann ein beliebiges herkömmliches Textdatenverarbeitungssystem verwenden, mit dem er auch seine spezifischen Absenderdaten aufbereitet, etwa die Darstellung eines Firmenlogos und/oder die Adresse unter anderem mit e-Mail-Adressen oder Telefonnummern.

Nach dem Erzeugen der Information in einem Textverarbeitungssystem Datenverarbeitungssystem kann diese in einer Datei abgelegt werden. Die Datei kann dann in einem absenderseitig vorhandenen Drucker ausgedruckt werden und es können etwaige Fehler durch Überprüfung des Druckbildes beseitigt werden.

Der Absender kann dann die der Druckversion 2 entsprechenden druckfähigen Daten, ein "virtuelles Druck-Dokument", mit einem herkömmlichen e-Mail-System direkt an ein elektronisches Portal, beispielsweise an das web-epostviper-portal aus Fig. 2 mit einer Auswahleinheit 3 übertragen oder kann diese Daten der ersten elektronischen Einrichtung 1 übersenden, welche über eine Drucker-Eingangsschnittstelle verfügt und die Weitersendung automatisiert vornimmt. Vorzugsweise ist die Auswahleinheit 3 über ein Intranet oder das Internet jeweils mit dem Absender und wenigstens einem Empfänger verbunden.

In weiterer Ausgestaltung der Erfindung umfaßt die elektronische Einrichtung 1 des Absenders sowie die elektronische Einrichtung 4 des Empfängers jeweils optional eine Datenendgeräte-Schnittstelle welche Daten überträgt, die per analogem oder digitalem Telefax abgesandt wurde, wobei auch für diesen Datentyp per Schrifterkennungssoftware weiterverarbeitbare Textbestandteile erstellt werden und diese mit einer entsprechenden Formatbeschreibung versehen zu einem virtuellen Dokument verarbeitet werden, welches dem Empfänger parallel zu dem Empfang des Telefax als weiterverarbeitbares elektronisches Dokument in gleicher Weise wie der vom Textverarbeitungssystem erzeugte und zu einem virtuellen Dokument umgesetzte Datensatz zur Verfügung gestellt wird.

Ferner verfügen die elektronischen Einrichtungen 1 und 4 wahlweise über eine Scanner-Schnittstelle um Daten übertragen und umsetzen zu können, welche bereits als zweidimensionale Daten auf Papier oder einer Folie vorliegen.

Zur Kommunikation zwischen dem Personalcomputer und der Einrichtung 1 bzw. 4 kann ferner eine Infrarotschnittstelle oder auch eine Schnittstelle nach dem Bluetoothstandard eingesetzt werden.

Die Auswahleinheit 3 ist in einer besonders bevorzugten Ausführungsform der vorliegenden Erfindung als Internet-Portal ausgeführt. Über eine Internetverbindung ist ein Kontakt zwischen dem Empfänger und der Auswahleinheit 3 vorgesehen. Dazu weist die Auswahleinheit 3 neben einer Eingangsbox 5 eine vorzugsweise mehrere Ausgangsboxen 6 auf. Eine vom Absender 1 eingehende Datei wird in der Eingangsbox 5 zwischengespeichert.

Vorzugsweise wird von einem in der Auswahleinheit 3 vorgesehenen Prozessor 7 die eingehende Datei auf empfängerspezifische Informationen überprüft und bei Vorhandensein dieser ausgelesen. Der Prozessor 7 veranlaßt dann die Übergabe der Datei an eine Adresse entsprechend der in der Datei enthaltenen empfängerspezifischen Information, etwa eine e-Mail-Adresse des Empfängers.

Vorzugsweise wird die Datei von dem Prozessor 7 in die dem Empfänger 4 zugeordnete Ausgangsbox 6 eingelesen. Der Empfänger 4 erhält daraufhin eine Nachricht darüber, daß in der ihm zugeordneten Ausgangsbox 6 der im Netzverbund vorgesehenen Auswahleinheit 3 eine Datei bereitgehalten wird. Diese Nachricht wird als e-Mail und/oder auch als Anruf auf ein SMS- oder WAP-fähiges übertragen.

Der Empfänger kann nun unter Rücksendung einer elektronischen Kennung an die Auswahleinheit 3 sich Zugang zu der Ausgangsbox 6 verschaffen und die Daten dort auslesen.
Die so ausgelesenen Daten werden nun empfängerseitig in der dort vorhandenen Datenverarbeitungsumgebung 8 in eine Druckversion 9 umgewandelt.

Diese Umwandlung kann entweder in der Datenverarbeitungseinrichtung 8 des Empfängers oder in einer vorgeschalteten zweiten elektronischen Einrichtung 4 am Ort des Empfängers erfolgen.

Zur Umwandlung wird die Strukturinformation überprüft und darin enthaltene Steuerzeichen an die empfängerseitigen Druckertreiber gegeben. Bei einer notwendigen Anpassung an die empfängerseitige Datenverarbeitungsumgebung 8 kann diese mit Hilfe von einem den Daten ebenfalls beigefügten Formatierungssatz dynamisch vorgenommen werden.
Die Druckversion 9, die empfängerseitig erzeugt wird, ist erfindungsgemäß identisch zu derjenigen 2, die in der Datenverarbeitungsumgebung des Absenders erzeugt worden ist. So ist etwa das Firmenlogo, das etwa vom Absender eingegeben worden ist, identisch übertragen worden. Auch die weitere in der Datei enthaltene Information, wie z.B. ein kompletter Rechnungsdatensatz in zu zahlender Rechnungsbeitrag sind ohne eine Manipulation in der Druckversion 2 der Datei empfängerseitig vorhanden.

Die Erfindung sieht des Weiteren vor, daß der Empfänger 4 durch Vorlage eines elektronischen Paßwortes den direkten Zugang zu den Daten erhält. So kann der Empfänger beispielsweise einen in der Datei eingegebenen Rechnungsbeitrag direkt in ein Buchungs- bzw. Buchführungsprogramm seiner Datenverarbeitungsumgebung 8 elektronisch einlesen.

Sofern ein Zahlungsvorgang absenderseitig zu bestätigen ist, kann der Empfänger 4 über das erfindungsgemäße Verfahren eine entsprechende, von ihm durchgeführte Zahlungsanweisung an den Absender 1 zurücksenden. Dabei kann er in seiner Datenverarbeitungsumgebung 8 ein Druckbild 9 der Zahlungsanweisung erzeugen. Dieses von ihm erzeugte Druckbild ist identisch zu demjenigen 2, was nach einer Übermittlung der Daten an den Absender in der dortigen Datenverarbeitungsumgebung über einen gewöhnlichen Druckvorgang erzeugt wird.

Bei einem ausgeführten Lese- und Weiterverarbeitungsvorgang auf der Seite des Empfängers 4 kann über die Auswahleinheit 3 wahlweise eine Bestätigung, welche in etwa einem Rückschein eines herkömmlich mit der Post übersandten Einschreibens entspricht, an den Absender 1 übermittelt werden.

Diese Bestätigung kann auch mit einem digitalen Wasserzeichen versehen sein, welches die Identität des Empfängers bestätigt und somit dem Absender 1 die korrekte Übertragung der Daten anzeigt.

Die Erfindung ist nicht auf das beschriebene Ausführungsbeispiel beschränkt, welches in vielfacher Art und Weise abgewandelt werden kann. So kann im Rahmen der vorliegenden Erfindung der Zugang sowohl empfänger- als auch absenderseitig auf verschiedenste Art und Weise durchgeführt werden. So ist neben einem herkömmlich vernetzten Computer oder einer Datenverarbeitungseinheit der Zugang auch über ein Funktelefon (Handy) oder etwa über einen mit einem Modem ausgestatteten tragbaren Computer (Laptop) sowie entsprechende Abkömmlinge wie einem Palmtop oder einem Organizer möglich.

Es liegt ferner im Rahmen der Erfindung, die Ausgabe der Daten und deren Aufbereitung empfängerseitig durch die elektronische Einrichtung 4 über eine Telefaxschnittstelle der Einrichtung 4 durchzuführen.

Ohne Beschränkung der Allgemeinheit kann in dem beschriebenen Ausführungsbeispiel der Empfänger auch der Absender sein, da die Erfindung ein bidirektionales System beschreibt.

Das erfindungsgemäße Verfahren kann auch zwischen mehreren Absendern und/oder Empfängern eingesetzt werden, wobei die entsprechend nötige Vervielfältigung durch die Auswahleinheit 3 vorgenommen wird.

Wie vorstehend beschrieben kann eine einfache Ausführungsform der Erfindung in einer reinen Softwarelösung bestehen, wenn die als Druckdaten erzeugten Daten von der Software zu einem virtuellen Dokument umgesetzt und an die Auswahleinheit 3 abgesandt werden. In diesem Falle ist der absender- und empfängerseitige Personalcomputer nicht jeweils mit der elektronischen Einrichtung 1 bzw. 4 sondern direkt mit dem Netzwerk der Auswahleinheit 3 verbunden.

Andererseits kann die Verwirklichung der Erfindung basierend auf einer stärker Hardware-orientierten Lösung einfach darin bestehen, daß die elektronischen Einrichtungen 1 und 4 an die bereits beim Absender bzw. Empfänger vorhandene Hardware angeschlossen werden und diese Hardware dann die komplette Kommunikation übernimmt. Hierbei kann beispielsweise der elektronischen Einrichtung 1 bzw. 4 eine bestimmter Drucker im Textverarbeitungsprogramm oder eine bestimmte Telefonnummer im Telefaxgerät zugeordnet werden, wodurch die Daten dann der Auswahleinheit 3 automatisch zugeleitet werden können.

Empfänger können direkt in den Textfeldern des vom Benutzer erzeugten Schriftstücks angegeben werden und werden dadurch automatisch durch die Auswahleinheit 3 mit der Information wie vom Benutzer angegeben versorgt. Alternativ können bestimmten Empfängern bestimmte Telefonnummern oder im Textsystem anwählbare Drucker zugeordnet werden, wodurch dann ebenfalls eine Weiterleitung an den zugeordneten Empfänger erfolgt.

## Patentansprüche

1. Verfahren zur Übertragung von Information, welche von einem Absender an wenigstens einen Empfänger gerichtet ist,
wobei
die Information in einer ersten Einrichtung aufgenommen und in elektronische Daten umgesetzt wird,
die elektronischen Daten zu dem wenigstens einen Empfänger übertragen werden,
**dadurch gekennzeichnet, daß**
ein virtuelles Papierdokument erzeugt wird,
welches in systemunabhängiger Weise
Inhalte der schriftlichen Information
sowie auf die Form bezogene Daten umfaßt, und
basierend auf den übertragenen elektronischen Daten ein Austausch von Datenformat- und/oder Strukturbeschreibungen durchgeführt wird,
derart, dass das virtuelle Papierdokument beim Empfänger in einer vom Empfänger wählbaren Form umgesetzt wird.

2. Verfahren zur Übertragung von Information nach Anspruch 1, bei welchem
die zu übertragende Information aus einer beliebigen zweidimensionalen oder elektronischen Form in elektronische Daten gewandelt wird, welche auf einem Netzwerk oder einem Netzverbund an den wenigstens einen Empfänger übertragen werden.

3. Verfahren zur Übertragung von Information nach Anspruch 1 oder 2, bei welchem
die frei wählbare Form der Datenwiedergabe, die Anzeige der Daten auf einem Monitor oder einem Datenwiedergabegerät, sowie den Ausdruck in zweidimensionaler Form durch einen, vorzugsweise an einen Rechner angeschlossenen, Drucker oder ein Telefaxgerät umfaßt und
ohne Auswahl der Form der Datenwiedergabe durch den Empfänger die Datenwiedergabe in einer Standardausgabeform erfolgt.

4. Verfahren zur Übertragung von Information nach einem der Ansprüche 1, 2 oder 3 bei welchem
mit der Information Rahmendaten, welche die Daten betreffende Strukturinformation und/oder Bearbeitungsinformation enthalten, an eine Auswahleinheit des Netzwerks oder Netzverbundes übertragen werden und
die Auswahleinheit in Abhängigkeit von der Bearbeitungsinformation die Daten für den wenigstens einen Empfänger speichert und abrufbar bereithält.

5. Verfahren nach Anspruch 4, bei welchem die Bearbeitungsinformation Information über den wenigstens einen Empfänger enthält.

6. Verfahren nach Anspruch 4 oder 5,
bei welchem die Bearbeitungsinformation Angaben zur Art und Zeit der Weiterleitung an den wenigstens einen Empfänger enthält.

7. Verfahren nach einem der Ansprüche 4, 5 oder 6, bei welchem die Bearbeitungsinformation eine Befehlssequenz umfaßt, welche in Abhängigkeit von einer Zustellung der Daten an den wenigstens einen Empfänger ein Empfangssignal an den Absender auslöst.

8. Verfahren nach einem der Ansprüche 4 bis 7,
bei welchem die Bearbeitungsinformation Daten betreffend eine Abfrage für eine Zugangsberechtigung enthält.

9. Verfahren nach einem der Ansprüche 4 bis 8,
bei welchem die Strukturinformation absenderspezifische Daten enthält.

10. Verfahren nach einem der Ansprüche 4 bis 9,
bei welchem die Strukturinformation eine Beschreibung des Aufbaus der elektronischen Daten enthält.

11. Verfahren nach Anspruch 10,
bei welchem die Beschreibung Steuerinformation zum Aufbau eines Druckbildes enthält.

12. Verfahren nach einem der Ansprüche 1 bis 11, bei welchem die elektronischen Daten mit einer Sicherungskennung zumindest teilweise gegen unbefugtes Lesen und/oder Daten-Manipulation gesichert sind.

13. Verfahren nach Anspruch 12,
bei welchem die Sicherungskennung Daten zur Stimmererkennung umfaßt.

14. Verfahren nach Anspruch 12 oder 13,
bei welchem die Sicherungskennung Daten zur Handschriftenauthentisierung umfaßt.

15. Verfahren nach Anspruch 12, 13 oder 14,
bei welchem die Sicherungskennung ein Kennwort umfaßt.

16. Verfahren nach einem der Ansprüche 12 bis 15,
bei welchem eine Sicherungskennung jeweils für die zu übertragende Information und/oder die Strukturinformation und/oder die Bearbeitungsinformation erstellt und übertragen wird.

17. Verfahren nach einem der Ansprüche 1 bis 16,
bei welchem die Daten Testsequenzen enthalten.

18. Verfahren nach einem der Ansprüche 1 bis 17,
bei welchem von zumindest einer ersten Einrichtung oder der Auswahleinheit in vorgegebenen Intervallen Testdaten übertragen werden.

19. Verfahren nach einem der Ansprüche von 4 bis 15,
bei welchem der Absender und der wenigstens eine Empfänger bei der Auswahleinheit zusammen mit Daten zur Sicherungskennung registriert werden.

20. Verfahren nach einem der Ansprüche 4 bis 19,
bei welchem der wenigstens eine Empfänger die Daten über funkbetriebene Endgeräte, insbesondere Mobilfunkgeräte, aus der Auswahleinheit auslesen kann.

21. Verfahren nach einem der Ansprüche 1 bis 21,
bei welchem
die erste Einrichtung elektronische Daten erzeugt, welche einer virtuellen Seite oder einem virtuellen Dokument mit mehreren virtuellen Seiten entsprechen und
die zweite Einrichtung aus den elektronischen Daten einer vitrtuellen Seite jeweils Daten für ein zweidimensionales Abbild erstellt,
wobei die Daten für das zweidimensionale Abbild je nach Auswahl der Form der Wiedergabe durch den Empfänger:
i) für ein Faxgerät empfangbare Daten,
ii) für ein ausgewähltes Textsystem Datenverarbeitungssystem formatierte, editierbare Daten,
iii) für einen bestimmten Drucker ausdruckgerecht formatierte Daten umfaßt.

22. Vorrichtung zur Übertragung von Information, insbesondere zur Durchführung eines Verfahrens nach den Ansprüchen von 1 bis 21, bei welcher die Information von einem Absender an wenigstens einen Empfänger gerichtet ist, welche **gekennzeichnet ist durch**
eine erste elektronische Einrichtung (1), in welcher die Information aufgenommen und in elektronische Daten umgesetzt wird,
wobei in der ersten elektronischen Einrichtung (1) basierend auf den umgesetzten elektronischen Daten ein virtuelles Papierdokument erzeugt wird,
welches in systemunabhängiger Weise Inhalte der schriftlichen Information
sowie auf die Form bezogene Daten umfaßt, und
eine zweite elektronische Einrichtung (4), in welcher basierend auf den übertragenenelektronisehen Daten beim Empfänger ein Austausch von Datenformat- und/oder Strukturbeschreibungen durchgeführt wird,
derart, dass das virtuelle Papierdokument
in einer vom Empfänger wählbaren Form umgesetzt wird.

23. Vorrichtung zur Übertragung von Information nach Anspruch 22, bei welcher die erste Einrichtung (1) eine Drucker-Schnittstelle, eine Datenendgeräte-Schnittstelle für den Anschluß eines Datenendgerätes, insbesondere eines Telefaxgerätes, an das analoge Telefonnetz eine Datenendgeräte-Schnittstelle für den Anschluß eines Datenendgerätes, insbesondere eines Telefaxgerätes, an das digitale Telefonnetz, und/oder eine Scanner-Schnittstelle umfaßt.

24. Vorrichtung zur Übertragung von Information nach Anspruch 23, bei welcher die zu übertragende Information in der ersten elektronischen Einrichtung (1)
an der Druckerschnittstelle empfangen wird, falls diese aus einem Text- oder Datenverarbeitungssystem generiert ist,
an der Datenendgeräte-Schnittstelle empfangen wird, falls diese per analogem oder digitalem Telefax abgesandt wurde, und/oder
an der Scanner-Schnittstelle empfangen wird, falls diese als zweidimensionale Daten auf Papier oder einer Folie vorliegen.

25. Vorrichtung nach Anspruch 24, bei welcher die empfangenen Daten in der ersten elektronischen Einrichtung (1) in ein Datenformat umgesetzt werden, welches einer virtuellen Seite oder einem virtuellen Dokument mit mehreren virtuellen Seiten entspricht und an die zweite elektronische Einrichtung (4) und/oder eine Auswahleinheit (3) abgesandt werden, und ohne Auswahl der Ausgabeform durch den Empfänger in einer Standardausgabeform bereitgestellt werden.

26. Vorrichtung zur Übertragung von Information nach Anspruch 22, 23, 24 oder 25, bei welcher
die zweite Einrichtung (4) einen Monitor, vorzugsweise eines Personalcomputers oder ein Datenwiedergabegerät zur Anzeige der übertragenen und in der zweiten elektronischen Einrichtung (4) oder der Auswahleinheit aufbereiteten Daten umfaßt und/oder,
einen Drucker oder ein Telefaxgerät für den Ausdruck der Daten in zweidimensionaler Form umfaßt.

27. Vorrichtung zur Übertragung von Information nach einem der Ansprüche von 22 bis 26, bei welcher
von der ersten Einrichtung (1) oder von der Auswahleinrichtung (3) zusätzliche elektronische Daten erzeugt werden, welche der Information zugeordnete Rahmendaten enthalten,
wobei die Rahmendaten die elektronischen Daten betreffende Strukturinformation und/oder Bearbeitungsinformation enthalten.

28. Vorrichtung zur Übertragung von Information nach einem der Ansprüche von 22 bis 27, ferner umfassend
eine Auswahleinheit (3) in einem Netzwerk oder Netzverbund, zu welcher die elektronischen Daten von der ersten Einrichtung (1) übertragbar sind,
wobei die Auswahleinheit (3) in Abhängigkeit von der Bearbeitungsinformation die Daten für den wenigstens einen Empfänger speichert und abrufbar bereithält.

29. Vorrichtung zur Übertragung von Information nach Anspruch 27 oder 28, bei welcher die Bearbeitungsinformation Angaben zur Art und Zeit der Weiterleitung an den wenigstens einen Empfänger enthält.

30. Vorrichtung zur Übertragung von Information nach Anspruch 27, bei welcher
die Auswahleinheit (3) die Weiterleitung der elektronischen Daten an eine zweite elektronische Einrichtung (4), welche sich vorzugsweise am Ort des wenigstens einen Empfängers befindet, gesteuert durch die Bearbeitungsinformation durchführt.

31. Vorrichtung zur Übertragung von Information nach einem der Ansprüche von 22 bis 30, bei welcher
die zweite elektronische Einrichtung (4) und/oder die Auswahleinheit (3) aus der Bearbeitungsinformation Daten betreffend eine Abfrage für eine Zugangsberechtigung extrahiert und basierend auf diesen Daten eine Zugangsberechtigungsabfrage durchführt.

32. Vorrichtung zur Übertragung von Information nach einem der Ansprüche von 22 bis 31, bei welcher in einem Speicherbereich der Auswahleinheit (3) und/oder der zweiten elektronischen Einrichtung (4) Daten betreffend den Absender und den wenigstens einen Empfänger zusammen mit Daten zur Sicherungskennung, vorzugsweise verschlüsselt, abgespeichert werden.

33. Vorrichtung nach einem der Ansprüche von 22 bis 32, bei welcher die Auswahleinheit (3) und/oder die zweite elektronische Einrichtung (4) eine Schrifterkennungseinheit umfaßt, mittels welcher digitalisiert vorliegende handschriftliche Information in digitale Textdaten umsetzbar ist.

34. Vorrichtung nach Anspruch 33, bei welcher in der Auswahleinheit (3) aus den digitalen Textdaten Steuerungsdaten gewonnen werden, um hierdurch eine Weiterleitung an einen bestimmten Empfänger oder eine Speicherung der Daten zu bewirken.

35. vorrichtung nach einem der Ansprüche von 22 bis 34, bei welcher die Auswahleinheit (3) und/oder die zweite elektronische Einrichtung (4) eine Funkschnittstelle umfaßt, mit welcher aus der zu übertragenden Information für den mobilen Empfang taugliche, insbesondere SMS- oder WAPformatierte Daten erzeugt und dem wenigstens eine Empfänger übermittelt werden.

36. Vorrichtung nach Anspruch 35, bei welcher die insbesondere SMS- oder WAP-formatierten Daten nach Aufforderung durch ein funkbetriebenes Endgerät, insbesondere Mobilfunkgerät, übermittelt werden.

37. Vorrichtung nach einem der Ansprüche 22 bis 36,
bei welchem die zweite elektronische Einrichtung über eine Infrarotschnittstelle verfügt, mittels welcher die empfangenen elektronischen Daten über optisch angekoppelte Endgeräte auslesbar sind.

38. Vorrichtung nach einem der Ansprüche 22 bis 37, bei welchem die zweite elektronische Einrichtung über eine Schnittstelle gemäß dem Bluetooth-Standard verfügt, mittels welcher die empfangenen elektronischen Daten über angekoppelte Endgeräte auslesbar sind.

## Claims

1. A method of transmitting information addressed by a sender to at least one receiver, wherein the information is received in a first device and converted to electronic data, the electronic data are transmitted to the at least one receiver, **characterised in that** a virtual paper document is produced which in system-independent manner comprises contents of the written information and data relating to the form, and on the basis of the transmitted electronic data an exchange of data format and/or structure descriptions is carried out in such manner that the virtual paper document is converted at the receiver's into a form selectable by the receiver.

2. A method of transmitting information according to claim 1, wherein the information for transmission is converted from any two-dimensional electronic form to electronic data which are transmitted over a network or a network connection to the at least one receiver.

3. A method of transmitting information according to claim 1 or 2, wherein the freely selectable form of data reproduction comprises the display of data on a monitor or a data reproduction device, and the print-out in two-dimensional form by a printer preferably connected to a computer, or a telefax device and the data reproduction is effected in a standard outputting form without the form of data reproduction being selected by the receiver.

4. A method of transmitting information according to any one of claims 1, 2 or 3, wherein outline data containing data relating to the structure information and/or processing information, are transmitted with the information to a selection unit of the network or network connection and the selection unit stores the data and holds it ready for retrieval for the at least one receiver in dependence on the processing information.

5. A method according to claim 4, wherein the processing information contains information concerning the at least one receiver.

6. A method according to claim 4 or 5, wherein the processing information contains details as to the nature and time of transmission to the at least one receiver.

7. A method according to any one of claims 4, 5 or 6, wherein the processing information comprises a command sequence which triggers a reception signal to the sender in dependence on the data being sent to the at least one receiver.

8. A method according to any one of claims 4 to 7, wherein the processing information contains data relating to a request for an access authorisation.

9. A method according to any one of claims 4 to 8, wherein the structure information contains sender-specific data.

10. A method according to any one of claims 4 to 9, wherein the structure information contains a description of the structure of the electronic data.

11. A method according to claim 10, wherein the description contains control information for the build-up of a printed picture.

12. A method according to any one of claims 1 to 11, wherein the electronic data are secured by a security code, at least partially against unauthorised reading and/or data manipulation.

13. A method according to claim 12, wherein the security code comprises data for voice recognition.

14. A method according to claim 12 or 13, wherein the security code comprises data for handwriting authentication.

15. A method according to claim 12, 13 or 14, wherein the security code comprises a password.

16. A method according to any one of claims 12 to 15, wherein a security code is prepared and transmitted for the information for transmission and/or for the structure information and/or for the processing information.

17. A method according to any one of claims 1 to 16, wherein the data contain test sequences.

18. A method according to any one of claims 1 to 17, wherein test data are transmitted from at least one first device or the selection unit at predetermined intervals.

19. A method according to any one of claims 4 to 15, wherein the sender and the at least one receiver are registered in the selection unit together with data for the security code.

20. A method according to any one of claims 4 to 19, wherein the at least one receiver can read out the data via wireless terminal units, particularly mobile wireless units, from the selection unit.

21. A method according to any one of claims 1 to 21, wherein the first device produces electronic data corresponding to a virtual page or a virtual document with a plurality of virtual pages and the second device prepares from the electronic data of a vertical page data for a two-dimensional image in each case, wherein, depending on the selection of the form of reproduction by the receiver, the data for the two-dimensional image comprises:
i) data receivable by a fax device,
ii) editable data formatted for a selected word processing or data processing system,
iii) data formatted for print-out for a specific printer.

22. Apparatus for transmitting information, particularly for performing a method according to claims 1 to 21, wherein the information is addressed by a sender to at least one receiver, said apparatus being **characterised by** a first electronic device (1), in which the information is received and converted to electronic data, wherein, on the basis of the converted electronic data, a virtual paper document is produced in the first electronic device (1), said virtual paper document comprising, in system-independent manner, contents of the written information and form-related data, and a second electronic device (4) in which on the basis of the transmitted electronic data an exchange of data format and/or structure descriptions is carried out at the receiver's in such manner that the virtual paper document is converted to a form selectable by the receiver.

23. Apparatus for transmitting information according to claim 22, wherein the first device (1) comprises a printer interface, a data terminal interface for connection of a data terminal, particularly a telefax device, to the analog telephone network, a data terminal interface for the connection of a data terminal, particularly a telefax device, to the digital telephone network, and/or a scanner interface.

24. Apparatus for transmitting information according to claim 23, wherein the information for transmission is received in the first electronic device (1) at the printer interface, if it is generated from a word or data processing system, is received at the data terminal interface if it was sent by analog or digital telefax and/or is received at the scanner interface if it is in the form of two-dimensional data on paper or a film.

25. Apparatus according to claim 24, wherein the received data are converted in the first electronic device (1) to a data format which corresponds to a virtual page or a virtual document with a plurality of virtual pages and are sent to the second electronic device (4) and/or a selection unit (3) and without selection of the outputting formed by the receiver are provided in a standard outputting form.

26. Apparatus for transmitting information according to claims 22, 23, 24 and 25, wherein the second device (4) comprises a monitor, preferably of a personal computer, or a data display unit to display the transmitted data prepared in the second electronic device (4) or the selection unit and/or a printer or a telefax device for print-out of the data in two-dimensional form.

27. Apparatus for transmitting information according to any one of claims 22 to 26, wherein additional electronic data are produced by the first device (1) or by the selection unit (3) and contain outline data relating to the information, wherein the outline data contain electronic data relating to the structure information and/or processing information.

28. Apparatus for transmitting information according to any one of claims 22 to 27, further comprising a selection unit (3) in a network or network connection to which the electronic data can be transmitted from the first device (1), wherein the selection unit (3) stores and prepares retrievably the data for the at least one receiver in dependence on the processing information.

29. Apparatus for transmitting information according to claim 27 or 28, wherein the processing information contains details as to the nature and time of transmission to the at least one receiver.

30. Apparatus for transmitting information according to claim 27, wherein the selection unit (3) carries out, under the control of the processing information, the transmission of the electronic data to a second electronic device (4) which is situated preferably at the at least one receiver's location.

31. Apparatus for transmitting information according to any one of claims 22 to 30, wherein the second electronic device (4) and/or the selection unit (3) extracts from the processing information data relating to a request for an access authorisation and, on the basis of said data, carries out an access authorisation request.

32. Apparatus for transmitting information according to any one of claims 22 to 31, wherein data relating to the sender and the at least one receiver together with data for the security code, preferably in encoded form, are stored in a storage zone of the selector unit (3) and/or the second electronic device (4).

33. Apparatus according to any one of claims 22 to 32, wherein the selection unit (3) and/or the second electronic device (4) comprises a writing recognition unit by means of which handwriting information in digitised form is convertible into digital text data.

34. Apparatus according to claim 33, wherein control data are obtained from the digital text data in the selection unit (3) in order thus to effect transmission to a specific receiver or for storage of the data.

35. Apparatus according to any one of claims 22 to 34, wherein the selection unit (3) and/or the second electronic device (4) comprises a wireless interface by means of which data appropriate for mobile reception, particularly SMS or WAP formatted data, are produced from the information for transmission and are transmitted to the at least one receiver.

36. Apparatus according to claim 35, wherein the data, particularly SMS or WAP formatted data, are transmitted on request by a wireless terminal, particularly a mobile wireless terminal.

37. Apparatus according to any one of claims 22 to 36, wherein the second electronic device has available an infrared interface by means of which the received electronic data can be read out via optically coupled terminals.

38. Apparatus according to any one of claims 22 to 37, wherein the second electronic device has available an interface on the Bluetooth standard, by means of which the received electronic data can be read out via coupled terminals.

## Revendications

1. Procédé destiné à la transmission d'une information qui est adressée par un expéditeur à au moins un destinataire, dans lequel
l'information est réceptionnée dans un premier dispositif et convertie en données électroniques,
les données électroniques sont transmises à l'au moins un destinataire,
**caractérisé en ce que**,
il est engendré un document papier virtuel, qui comporte de façon indépendante du système des contenus de l'information écrite ainsi que des données relatives à la forme, et un échange de descriptions de format de données et/ou de structure étant effectué sur la base des données électroniques transmises, de telle sorte que le document papier virtuel soit converti chez le destinataire en une forme pouvant être choisie par le destinataire.

2. Procédé destiné à la transmission d'une information selon la revendication 1, dans lequel l'information à transmettre est convertie en données électroniques à partir d'une forme quelconque en deux dimensions ou électronique, qui sont transmises à l'au moins un destinataire via un réseau ou une combinaison de réseaux.

3. Procédé destiné à la transmission d'une information selon la revendication 1 ou 2, qui comprend
la forme de représentation de données pouvant être librement choisie, l'affichage des données sur un moniteur ou un appareil de représentation de données, ainsi que l'impression en deux dimensions par une imprimante ou un appareil téléfax, qui est de préférence raccordé à un ordinateur, et dans lequel,
la représentation des données est effectuée sous une forme de sortie standard sans sélection de la forme de représentation de données par le destinataire.

4. Procédé destiné à la transmission d'une information selon l'une des revendications 1, 2 ou 3, dans lequel
des données cadre contenant les données concernant l'information de structure et/ou l'information de traitement sont transmises avec l'information à une unité de sélection du réseau ou de la combinaison de réseaux, et
l'unité de sélection mémorise les données en fonction de l'information de traitement, et les tient prêtes à être appelées par l'au moins un destinataire.

5. Procédé selon la revendication 4, dans lequel l'information de traitement contient une information relative à l'au moins un destinataire.

6. Procédé selon la revendication 4 ou 5, dans lequel l'information de traitement contient des indications relatives au mode et au temps de la retransmission à l'au moins un destinataire.

7. Procédé selon l'une des revendications 4, 5 ou 6, dans lequel l'information de traitement comporte une séquence d'instruction qui, en fonction d'une transmission des données à l'au moins un destinataire, déclenche un signal de réception vers l'expéditeur.

8. Procédé selon l'une quelconque des revendications 4 à 7, dans lequel l'information de traitement contient des données relatives à une demande d'autorisation d'accès.

9. Procédé selon l'une quelconque des revendications 4 à 8, dans lequel l'information de structure contient des données spécifiques à l'expéditeur.

10. Procédé selon l'une quelconque des revendications 4 à 9, dans lequel l'information de structure contient une description de la structure des données électroniques.

11. Procédé selon la revendication 10, dans lequel la description contient une information de commande pour la structure d'une image d'impression.

12. Procédé selon l'une quelconque des revendications 1 à 11, dans lequel les données électroniques sont sécurisées par une identification de sécurité, au moins partiellement, vis-à-vis d'une lecture et/ou d'une manipulation non autorisées des données.

13. Procédé selon la revendication 12, dans lequel l'identification de sécurité comporte des données pour la reconnaissance de voix.

14. Procédé selon la revendication 12 ou 13, dans lequel l'identification de sécurité comporte des données pour l'authentification de l'écriture manuscrite.

15. Procédé selon la revendication 12, 13 ou 14, dans lequel l'identification de sécurité comporte un mot de passe.

16. Procédé selon l'une quelconque des revendications 12 à 15, dans lequel une identification de sécurité est à chaque fois établie et transmise pour l'information et/ou pour l'information de structure et/ou l'information de traitement à transmettre.

17. Procédé selon l'une quelconque des revendications 1 à 16, dans lequel les données contiennent des séquences de test.

18. Procédé selon l'une quelconque des revendications 1 à 17, dans lequel des données de test sont transmises à intervalles prédéterminés par au moins un premier dispositif ou par l'unité de sélection.

19. Procédé selon l'une quelconque des revendications 4 à 15, dans lequel l'expéditeur et l'au moins un destinataire sont enregistrés dans l'unité de sélection avec des données pour l'identification de sécurité.

20. Procédé selon l'une quelconque des revendications 4 à 19, dans lequel l'au moins un destinataire peut lire les données à partir de l'unité de sélection par l'intermédiaire de terminaux fonctionnant par radio, notamment d'appareils radio mobiles.

21. Procédé selon l'une quelconque des revendications 1 à 21, dans lequel
le premier dispositif génère des données électroniques qui correspondent à une page virtuelle ou à un document virtuel de plusieurs pages virtuelles, et
à partir des données électroniques d'une page virtuelle, le deuxième dispositif établit des données pour une reproduction en deux dimensions,
les données pour la reproduction en deux dimensions étant, en fonction du choix de la forme de représentation par le destinataire :
i) des données pouvant être reçues par un fax,
ii) des données formatées pouvant être éditées pour un système de traitement de texte, système de traitement de données choisi,
iii) des données formatées pour pouvoir être imprimées sur une certaine imprimante.

22. Dispositif destiné à la transmission d'une information, notamment à la mise en oeuvre d'un procédé selon l'une quelconque des revendications 1 à 21, dans lequel l'information est adressée par un expéditeur à au moins un destinataire, lequel dispositif est **caractérisé par**
un premier dispositif électronique (1) dans lequel l'information est réceptionnée et convertie en données électroniques,
un document papier virtuel étant engendré dans le premier dispositif électronique (1) sur la base des données électroniques converties, lequel comporte de façon indépendante au système des contenus de l'information écrite ainsi que des données relatives à la forme, et
un deuxième dispositif électronique (4), dans lequel un échange de descriptions de format de données et/ou de structure est effectué sur la base des données électroniques transmises, de telle sorte que le document papier virtuel soit converti en une forme pouvant être choisie par le destinataire.

23. Dispositif destiné à la transmission d'une information selon la revendication 22, dans lequel le premier dispositif (1) comporte une interface d'imprimante, une interface de terminal de données pour le raccordement d'un terminal de données, notamment d'un appareil téléfax, au réseau téléphonique analogique, une interface de terminal de données pour le raccordement d'un terminal de données, notamment d'un appareil téléfax, au réseau téléphonique numérique, et/ou une interface de scanner.

24. Dispositif destiné à la transmission d'une information selon la revendication 23, dans lequel l'information à transmettre dans le premier dispositif électronique (1)
est reçue par l'interface de l'imprimante, au cas où elle est générée à partir d'un système de traitement de texte ou de données,
est reçue par l'interface du terminal de données, au cas où elle a été envoyée par un téléfax analogique ou numérique, et/ou
est reçue par l'interface du scanner, au cas où elle existe sur du papier ou sur une feuille en tant que données en deux dimensions.

25. Dispositif selon la revendication 24, dans lequel les données reçues sont converties dans le premier dispositif électronique (1) en un format de données qui correspond à une page virtuelle ou à un document virtuel de plusieurs pages virtuelles, et sont envoyées au deuxième dispositif électronique (4) et/ou à une unité de sélection (3), et sont mises à disposition sous une forme de sortie standard sans sélection de la forme de sortie par le destinataire.

26. Dispositif destiné à la transmission d'une information selon la revendication 22, 23, 24 ou 25, dans lequel
le deuxième dispositif (4) comporte un moniteur, de préférence d'un ordinateur personnel, ou un appareil de représentation de données pour l'affichage des données transmises et traitées dans le deuxième dispositif électronique (4) ou dans l'unité de sélection, et/ou
une imprimante ou un appareil téléfax pour l'impression des données sous une forme en deux dimensions.

27. Dispositif destiné à la transmission d'une information selon l'une quelconque des revendications 22 à 26, dans lequel
des données électroniques supplémentaires sont générées par le premier dispositif (1) ou par l'unité de sélection (3), qui contiennent des données cadre associées à l'information,
les données cadre contenant une information de structure et/ou une information de traitement concernant les données électroniques.

28. Dispositif destiné à la transmission d'une information selon l'une quelconque des revendications 22 à 27, comportant en outre
une unité de sélection (3) dans un réseau ou une combinaison de réseaux, à laquelle les données électroniques peuvent être transmises par le premier dispositif (1),
l'unité de sélection (3) mémorisant les données en fonction de l'information de traitement, et les tenant prêtes à être appelées par l'au moins un destinataire.

29. Dispositif destiné à la transmission d'une information selon la revendication 27 ou 28, dans lequel l'information de traitement contient des indications relatives au mode et au temps de la retransmission à l'au moins un destinataire.

30. Dispositif destiné à la transmission d'une information selon la revendication 27, dans lequel l'unité de sélection (3), commandée par l'information de traitement, effectue la retransmission des données électroniques à un deuxième dispositif électronique (4), qui est de préférence situé sur le lieu de l'au moins un destinataire.

31. Dispositif destiné à la transmission d'une information selon l'une quelconque des revendications 22 à 30, dans lequel le deuxième dispositif électronique (4) et/ou l'unité de sélection (3) extraient des données relatives à une demande d'autorisation d'accès à partir de l'information de traitement, et effectuent une demande d'autorisation d'accès sur la base de ces données.

32. Dispositif destiné à la transmission d'une information selon l'une quelconque des revendications 22 à 31, dans lequel des données concernant l'expéditeur et l'au moins un destinataire sont mémorisées avec des données pour une identification de sécurité, de préférence à l'état codé, dans une zone de mémoire de l'unité de sélection (3) et/ou du deuxième dispositif électronique (4).

33. Dispositif selon l'une quelconque des revendications 22 à 32, dans lequel l'unité de sélection (3) et/ou le deuxième dispositif électronique (4) comportent une unité d'identification d'écriture, au moyen de laquelle une information manuscrite numérisée peut être convertie en données numériques de texte.

34. Dispositif selon la revendication 33, dans lequel des données de commande sont générées dans l'unité de sélection (3) à partir des données numériques de texte, afin d'assurer ainsi une retransmission à un certain destinataire ou une mémorisation des données.

35. Dispositif selon l'une quelconque des revendications 22 à 34, dans lequel l'unité de sélection (3) et/ou le deuxième dispositif électronique (4) comportent une interface radio, avec laquelle des données formatées appropriées pour la réception mobile, notamment pour le SMS ou le WAP, sont générées à partir de l'information à transmettre et transmises à l'au moins un destinataire.

36. Dispositif selon la revendication 35, dans lequel les données formatées, notamment pour le SMS ou le WAP, sont transmises sur demande d'un terminal fonctionnant par radio, notamment d'un appareil radio mobile.

37. Dispositif selon l'une quelconque des revendications 22 à 36, dans lequel le deuxième dispositif électronique dispose d'une interface à infrarouge, au moyen de laquelle les données électroniques reçues peuvent être lues par l'intermédiaire de terminaux qui y sont couplés par voie optique.

38. Dispositif selon l'une quelconque des revendications 22 à 37, dans lequel le deuxième dispositif électronique dispose d'une interface selon le standard Bluetooth, au moyen de laquelle les données électroniques reçues peuvent être lues par l'intermédiaire de terminaux qui y sont couplés.
